# FASCICULE DE BREVET EUROPEEN

(11) **EP 4 528 346 B1**
(45) Date de publication et mention de la délivrance du brevet: **11.03.2026**
(21) Numéro de dépôt: 24201161.7
(22) Date de dépôt: 18.09.2024
(51) Int. Cl.: G02B 6/44, H02G 15/113, H02G 15/10

(54) **BOÎTIER DE RACCORDEMENT COMPRENANT UN ORGANE AMOVIBLE DE STOCKAGE D'UNE SURLONGUEUR DE CÂBLE**
ANSCHLUSSDOSE MIT ABNEHMBAREM ELEMENT ZUR AUFBEWAHRUNG EINER ÜBERLÄNGE EINES KABELS
CONNECTION BOX COMPRISING A REMOVABLE MEMBER FOR STORING AN EXCESS LENGTH OF CABLE

(30) Priorité: 20.09.2023 FR 2309958
(43) Date de publication de la demande: 26.03.2025
(73) Titulaire: Aginode Group, 75001 Paris (FR)
(72) Inventeur: LUCHE DAVAUX, Amandine, 75001 Paris (FR); TRONCONI, Giovanni, 75001 Paris (FR)
(74) Mandataire: Ipsilon

(56) Documents cités:
- WO-A1-2022/076722
- WO-A1-2022/170096
- FR-A1- 2 577 688
- JP-B2- H0 672 968
- US-A1- 2009 060 442
- US-A1- 2012 308 189
- US-A1- 2021 011 239
- US-B1- 11 641 078

## Description

### Domaine technique

La présente invention concerne un boîtier de raccordement électrique et/ou optique comprenant un organe amovible de stockage d'une surlongueur de câble.

### Arrière-plan technologique

Dans un réseau électrique ou optique, il est courant de devoir subdivisé une alimentation en énergie électrique ou une transmission d'information via un câble optique pour connecter un point de distribution de ce réseau vers une pluralité de point de réception de ce même réseau. Pour cela, un câble de distribution (ou câble principal) électrique ou optique peut présenter une pluralité de faisceaux électriques ou optiques devant être chacun connectés à un câble de dérivation (ou câble secondaire) desservant ledit point de réception. Cette connexion est généralement réalisée au sein d'un boîtier de raccordement électrique ou optique.

Dans l'exemple d'un réseau optique, le câble de distribution comprend une pluralité de fibres optiques sous forme de modules de fibres optiques ou directement accessibles et devant être raccordées à différents câbles de dérivation pour raccorder directement ou indirectement des abonnés au réseau. Cette connexion est réalisée à l'intérieur d'un boîtier de raccordement optique.

Pour raccorder une fibre optique de ce câble de distribution avec un câble de dérivation optique, il est nécessaire de dénuder l'ensemble du câble de distribution sur une longueur donnée de quelques mètres, de façon à pouvoir raccorder une ou plusieurs de ses fibres dans le boitier de raccordement. Dès lors, le câble de distribution dénudé laisse apparaître l'ensemble des fibres optiques ou des modules du câble de distribution. Il est alors possible de sélectionner une fibre optique pour la raccorder aux dérivations dans le boîtier de raccordement. Il est néanmoins nécessaire que le boîtier de raccordement puisse abriter l'ensemble des fibres optiques ou modules dénudés. Ces fibres optiques ou modules dénudés forment une surlongueur de câble de distribution à loger dans le boîtier.

Cette surlongueur doit être stockée à l'intérieur du boîtier mais également être suffisamment bien maintenue pour ne pas interférer avec la fermeture du boîtier et la zone de raccordement des fibres optiques ou bien encore ne pas gêner un installateur réalisant une opération d'installation ou de maintenance sur le boîtier de raccordement.

De plus, il est nécessaire de rendre cette surlongueur suffisamment accessible pour l'installateur car il est très courant de réaliser des raccordements de fibre optiques espacés dans le temps. En effet, il est par exemple courant d'avoir besoin de raccorder un nouvel abonné ayant besoin d'être connecté au réseau de télécommunication.

De plus, il est important de pouvoir garantir une continuité de raccordement des fibres optiques déjà raccordées même dans le cadre d'une intervention ultérieure. En effet, il est important pour le confort des utilisateurs de ne pas subir de déconnexion à chaque intervention d'un installateur.

Il est connu d'utiliser un panier disposé à l'intérieur du boîtier de raccordement pour stocker la surlongueur. La surlongueur de câble est généralement lovée ou enroulée à l'intérieur d'un espace de réception formé par le panier.

Ce panier peut être mobile comme dans le document FR3108708 de manière à améliorer l'accessibilité à la surlongueur de câble mais également à la zone de raccordement des fibres optiques.

Une difficulté des paniers existant est que l'installateur doit soutenir le boîtier de raccordement et la panier en même temps lorsque l'installateur intervient sur la surlongueur soit pour la lover à l'intérieur du panier soit pour manipuler cette surlongueur déjà lovée à l'intérieur du panier. Ceci oblige l'installateur à poser le boîtier de raccordement ou à mobiliser l'une de ses mains pour soutenir le boîtier de raccordement ce qui est très peu pratique et générateur de risque pour le matériel. D'autres éléments d'art antérieur sont divulgués dans la publication US 2021/011239 A1.

Il existe donc un besoin pour un boîtier de raccordement permettant une manipulation plus aisée de la surlongueur de câble de distribution.

### Résumé de l'invention

Pour cela, l'invention propose un boîtier de raccordement électrique et/ou optique d'au moins un câble de distribution à une pluralité de câbles de dérivation, ledit boîtier de raccordement comprenant :
- un corps de boîtier définissant une cavité de réception d'au moins un organe de connexion dudit au moins un câble de distribution avec la pluralité de câbles de dérivation, ladite cavité de réception étant ouverte au niveau d'une face supérieure,
- un capot fixé au corps de boîtier pour sélectivement fermer la cavité de réception au niveau de la face supérieure,
- au moins un passage d'entrée de câble dans la cavité de réception pour ledit au moins câble de distribution,
- au moins un passage de sortie de câble de la cavité de réception pour la pluralité de câbles de dérivation,
- un organe de stockage d'une surlongueur de câble de distribution formant un espace de stockage pour recevoir une portion de câble de distribution enroulée sur elle-même, l'organe de stockage est monté de manière amovible sur le corps de boîtier pour permettre le retrait de l'organe de stockage de la cavité de réception au travers de la face supérieure de la cavité de réception, l'organe de stockage formant ledit au moins un passage d'entrée de câble de manière à pouvoir enfiler un ou plusieurs câbles de distribution au travers dudit au moins un passage d'entrée de câble et disposer une surlongueur du ou des câbles de distribution dans l'espace de stockage lorsque l'organe de stockage est retiré de la cavité de réception.

L'organe de stockage de la surlongueur est conçu pour être amovible vis-à-vis du corps de boîtier de manière à pouvoir lover la surlongueur de câble de distribution sans avoir à manipuler le corps de boîtier. Ceci rend l'opération bien plus aisée pour l'installateur, notamment lorsque le câble de distribution est déjà au moins en partie raccordé aux câbles de dérivation.

De plus, l'organe de stockage intègre ledit au moins un passage d'entrée de câble du corps de boîtier. Ainsi, l'organe de stockage regroupe la fonction de stockage de la surlongueur mais également la fonction de passage d'entrée de ce câble dans le corps de boîtier. C'est particulièrement utile pour l'installateur car le câble de distribution est généralement arrimé au corps de boîtier au niveau du passage d'entrée de câble. Dès lors, il est rendu possible de combiner le passage d'entrée du câble, son arrimage et son stockage sur un seul et même organe amovible. Lorsque l'installateur désolidarise l'organe de stockage du corps de boîtier, le câble de distribution est ainsi au moins en partie maintenu par le passage d'entrée de câble ce qui facilite la manipulation de l'installateur.

En outre, l'organe de stockage est configuré pour être amovible par rapport au corps de boîtier pour être retiré au travers de la face supérieure du corps de boîtier. Ainsi, cela permet de sortir la surlongueur de câble de distribution par une face libre de la cavité de réception ce qui permet aux fibres optiques ou conducteurs déjà raccordés de le rester même quand l'organe de stockage est désolidarisé du corps de boîtier.

Le boîtier de raccordement comprend au moins un organe de connexion dudit au moins un câble de distribution avec la pluralité de câbles de dérivation, l'organe de connexion étant reçu dans la cavité du corps du boîtier.

L'organe de stockage est un élément dissocié de l'organe de connexion. En d'autres termes, l'organe de stockage est un élément indépendant et séparé de l'organe de connexion. Selon une autre formulation, l'organe de stockage est amovible par rapport à l'organe de connexion. Ainsi, l'organe de stockage et l'organe de connexion peuvent être manipulés indépendamment, ce qui peut faciliter l'installation et la maintenance du boîtier de raccordement. Il est ainsi possible de retirer l'organe de stockage de la cavité de réception tout en laissant l'organe de connexion à l'intérieur de la cavité de réception, et inversement.

L'organe de connexion comprend une pluralité de d'éléments de jonction ou de raccordement de chacun des câbles de dérivation avec ledit au moins un câble de distribution. L'organe de connexion peut comprendre par exemple des cassettes d'épissurage de fibres optiques.

Selon un mode de réalisation du boîtier de raccordement, l'organe de stockage comprend une portion de stockage définissant un espace de stockage d'une surlongueur de câble de distribution et une portion de passage formant ledit au moins passage d'entrée de câble.

Selon un mode de réalisation du boîtier de raccordement, la portion de stockage est mobile par rapport à la portion de passage entre une position relevée dans laquelle l'espace de stockage est accessible à un installateur et une position rentrée.

Selon un mode de réalisation du boîtier de raccordement, la portion de stockage s'étend longitudinalement le long d'un axe de stockage, le corps de boîtier comprenant une paroi de fond correspondant au fond de la cavité de réception, l'axe de stockage s'étendant substantiellement parallèlement à la paroi de fond lorsque la portion de stockage est dans la position rentrée.

Selon un mode de réalisation du boîtier de raccordement, la portion de stockage est disposée le long d'une paroi périphérique du corps de boîtier lorsque la portion de stockage est dans la position rentrée.

Selon un mode de réalisation du boîtier de raccordement, la portion stockage est mobile en rotation par rapport à la portion de passage autour d'un axe de relevage entre les positions relevée et rentrée.

Selon un mode de réalisation du boîtier de raccordement, la portion de stockage présente un débattement angulaire d'au moins 20° entre les positions relevée et rentrée, de préférence un débattement angulaire d'au moins 45°.

Selon un mode de réalisation du boîtier de raccordement, l'organe de stockage comprend un organe d'arrimage d'un câble de distribution disposé à proximité dudit au moins un passage d'entrée de câble.

Selon un mode de réalisation du boîtier de raccordement, l'organe d'arrimage est disposé sur la portion de passage.

Selon un mode de réalisation du boîtier de raccordement, l'organe de stockage comprend un support de passage formant ledit au moins un passage d'entrée de câble, le corps de boîtier comprenant une paroi périphérique formant un évidement de passage configuré pour recevoir ledit support de passage lorsque l'organe de stockage est monté sur le corps de boîtier.

Selon un mode de réalisation du boîtier de raccordement, l'évidement de passage est en complémentarité de forme avec le support de passage de sorte que le support de passage forme une portion de ladite paroi périphérique lorsque l'organe de stockage est monté sur le corps de boîtier.

Selon un mode de réalisation du boîtier de raccordement, le support de passage est une plaque formant un ou plusieurs trous de passage de câble.

Selon un mode de réalisation du boîtier de raccordement, l'évidement de passage présente un contour ouvert au niveau d'une portion supérieure de manière à pouvoir insérer simultanément le support de passage dans l'évidement de passage et l'espace de stockage dans la cavité de réception.

Selon un mode de réalisation du boîtier de raccordement, ledit au moins un câble de distribution et la pluralité de câbles de dérivation sont des câbles optiques.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1, représente une vue en perspective d'un boîtier de raccordement comprenant un corps de boîtier et un capot en position ouverte, le boîtier de raccordement comprenant un organe de stockage d'une surlongueur de câble de distribution disposé dans une position rentrée;
[fig. 2] La figure 2 représente une vue en perspective détaillée de l'organe de stockage de la figure 1 disposé dans la cavité de réception du corps de boîtier en position rentrée;
[fig. 3] La figure 3 représente une vue en perspective isolée de l'organe de stockage de la figure 1 en position rentrée ;

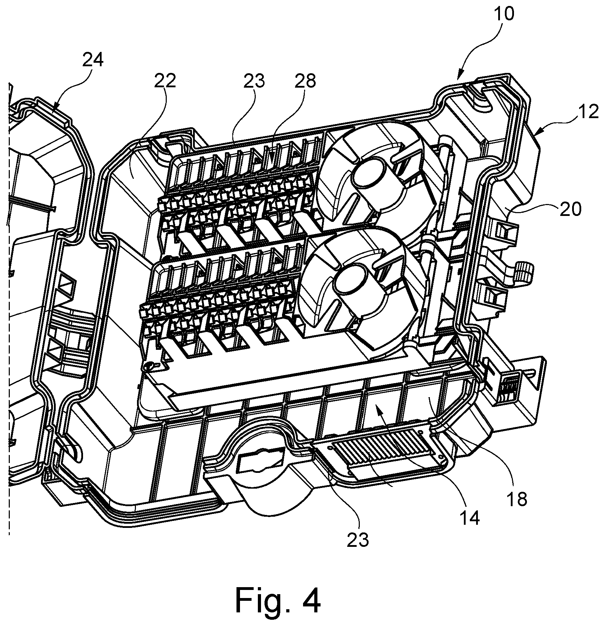

[fig. 4] La figure 4 représente une vue en perspective du boîtier de raccordement de la figure 1 sans organe de stockage ;
[fig. 5] La figure 5 représente une vue en perspective isolée de l'organe de stockage de la figure 1 en position relevée ;
[fig. 6] La figure 6 représente une vue en perspective détaillée de l'organe de stockage de la figure 1 disposé dans la cavité de réception du corps de boîtier en position relevée;

### Description de mode(s) de réalisation

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

La présente invention est illustrée à l'aide des figures qui montrent un boîtier de raccordement électrique et/ou optique permettant le raccordement entre un ou plusieurs câble de distribution et plusieurs câbles de dérivation.

Pour des raisons de clarté du présent exposé, le boîtier de raccordement sera décrit en lien avec un réseau de télécommunication utilisant des câbles optiques comprenant des fibres optiques. Le champ de l'invention s'applique toutefois également à un réseau de transmission d'information ou d'énergie utilisant des câbles électriques. Un câble de distribution électrique comprend ainsi une pluralité de conducteurs électriques pouvant être raccordés à une pluralité de câbles de dérivation électriques.

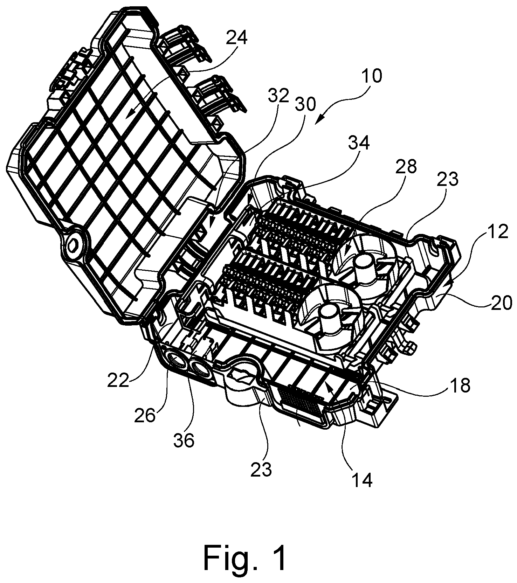

La figure 1 représente un boîtier de raccordement 10 électrique et/ou optique pour le raccordement d'un ou plusieurs câbles de distribution avec un ou plusieurs câble de dérivation. Pour des raisons de clarté, il sera fait référence à un seul câble de distribution dans le reste de la description.

Le boîtier de raccordement 10 comprend un corps de boîtier 12 définissant une cavité de réception 14 d'au moins un organe de connexion du câble de distribution avec la pluralité de câbles de dérivation.

Le corps de boîtier 12 comprend une paroi de fond 18 et des parois périphériques s'étendant perpendiculairement par rapport à la paroi de fond 18 pour définir la cavité de réception 14. Les parois périphériques s'étendent de préférence de manière continue le long d'un bord périphérique de la paroi de fond 18. Les parois périphériques comprennent un face frontale 20, une paroi arrière 22 ainsi que deux parois latérales 23 opposées disposées entre les parois arrière 22 et frontale 20.

Le corps de boîtier 12 forme de préférence un boîtier parallélépipédique avec une paroi de fond 18 substantiellement plate. Le corps de boîtier 12 présente ainsi une forme carrée ou rectangulaire avec des parois périphériques s'étendant à partir de cette paroi de fond 18 plate.

La cavité de réception 14 est ouverte au niveau d'une face supérieure. Cette face supérieure est située à l'opposé de la paroi de fond 18 par rapport à la cavité de réception 14. On entend par « ouverte » le fait que la cavité de réception ne comprend pas de paroi supérieure obstruant la cavité de réception 14. Ainsi, il est possible d'extraire ou de retirer des composants présents à l'intérieur de la cavité de réception 14.

Le boîtier de raccordement 10 comprend également un capot 24 fixé au corps de boîtier 12 pour sélectivement fermer la cavité de réception 14 au niveau de la face supérieure. Le capot 24 est ainsi mobile entre une position de fermeture de la cavité de réception 14 et une position d'ouverture de cette cavité de réception 14. De manière préférée, le capot 24 est fixé au corps de boîtier 12 au niveau de la paroi arrière 22.

Le boîtier de raccordement 10 comprend au moins un passage d'entrée de câble 26 dans la cavité de réception 14 pour ledit au moins câble de distribution. Le ou les passages d'entrée de câble 26 sont de préférence formés au travers d'une paroi périphérique du corps de boîtier 12. Le ou les passages d'entrée de câble 26 correspondent de préférence à un ou plusieurs trous, présentant notamment un contour fermé. Le passage d'entrée de câble correspond par exemple à un trou circulaire formé dans une paroi périphérique du corps de boîtier 12. D'une manière générale, les passages d'entrée de câble 26 peuvent être de toute forme et présenter un contour partiellement ouvert.

Le boîtier de raccordement 10 comprend également au moins un passage de sortie de câble de la cavité de réception pour la pluralité de câbles de dérivation. Le ou les passages de sortie de câble sont également de préférence formés au travers d'une paroi périphérique du corps de boîtier 12.

Le boîtier de raccordement 10 comprend un organe de connexion 28 au sein duquel le ou les câbles de distribution sont raccordés aux câbles de dérivation. L'organe de connexion comprend une pluralité de d'éléments de jonction ou de raccordement de chacun des câbles de dérivation avec le câble de distribution. Cet organe de connexion 28 peut comprendre par exemple des cassettes d'épissurage de fibres optiques.

Le boîtier de raccordement 10 comprend en outre un organe de stockage 30 d'une surlongueur de câble de distribution. L'organe de stockage 30 forme un espace de stockage 32 pour recevoir une portion de câble de distribution enroulée sur elle-même, correspondant ici à une surlongueur de câble de distribution. L'organe de stockage 30 est de préférence disposé sur la paroi de fond 18, par exemple entre l'organe de connexion 28 et une paroi périphérique du corps de boîtier 12.

L'organe de stockage 30 est un élément dissocié de l'organe de connexion 28. En d'autres termes, l'organe de stockage 30 est un élément indépendant et séparé de l'organe de connexion 28.

L'organe de stockage 30 est monté de manière amovible sur le corps de boîtier 12. L'organe de stockage 30 peut ainsi être désolidarisé ou décroché du corps de boîtier 12. En particulier, l'organe de stockage 30 est configuré pour être retiré du corps de boîtier 12 au travers de la face supérieure de la cavité de réception 14. Ainsi, l'organe de stockage 30 peut être retiré de la cavité de réception 14 en éloignant l'organe de stockage de la paroi de fond 18 le long d'une trajectoire passant par la paroi de fond 18 et traversant la face supérieure.

L'organe de stockage 30 est de préférence formé de deux sous-ensembles : une portion de stockage 34 et une portion de passage 36.

La portion de stockage 34 définit l'espace de stockage 32 de la surlongueur de câble. Les dimensions de la portion de stockage 34 permettent de lover une surlongueur de plusieurs mètres de câble de distribution au sein de l'espace de stockage 32.

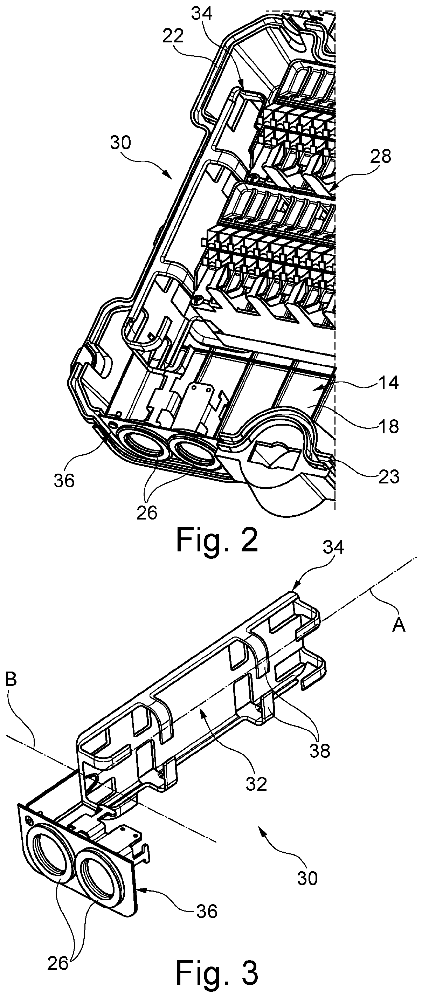

La portion de stockage 34 est destinée à être disposée à l'intérieur de la cavité de réception 14 du corps de boîtier 12 lorsque l'organe de stockage 30 est disposé dans sa position de fonctionnement. En particulier, la portion de stockage 34 est destinée à être disposée dans un logement formé au moins en partie par la paroi de fond 18, entre l'organe de connexion 28 et une paroi périphérique. Dans l'exemple de réalisation des figures 1 et 2, la portion de stockage 34 est disposée le long et à proximité de la paroi arrière 22 lorsque l'organe de stockage 30 est disposé dans la cavité de réception 14.

La portion de stockage 34 forme un panier ou une cage partiellement ouverte pour permettre le retrait de la surlongueur par un installateur. La portion de stockage 34 est également configurée pour permettre la retenue de la surlongueur au sein de l'espace de stockage 32. Pour cela, la portion de stockage 34 comprend des éléments ou bras de retenue 38 fermant partiellement l'espace de stockage 32 pour retenir la surlongueur dans cet espace de stockage 32. La portion de stockage 34 comprend une ouverture à proximité de ces éléments ou bras de retenue 38 de manière à autoriser le retrait de la surlongueur par un installateur.

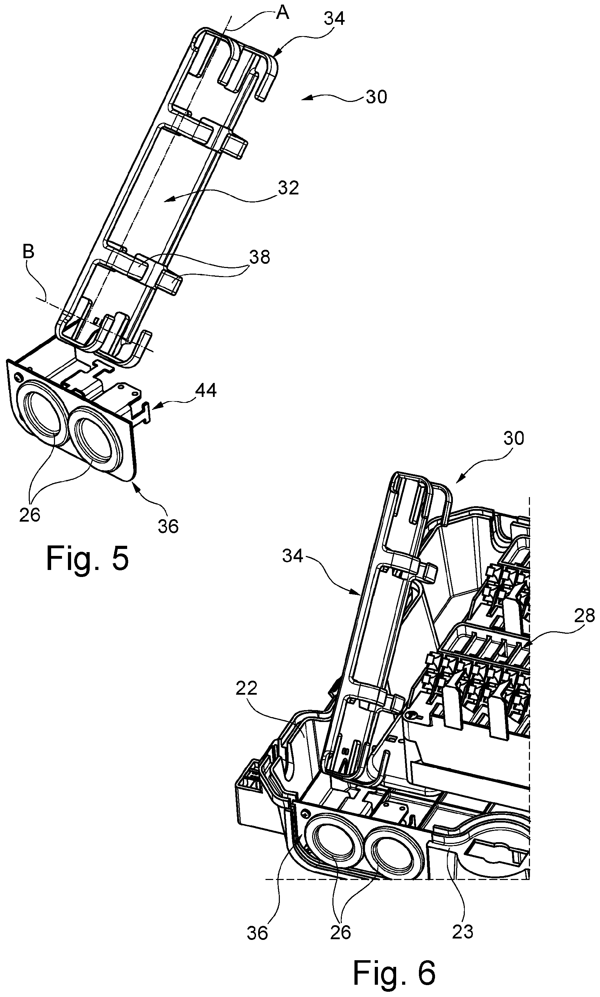

Les portions de stockage 34 et de passage 36 sont fixées l'une à l'autre. Selon une configuration préférée, la portion de stockage 34 est mobile par rapport à la portion de passage 36 entre une position relevée (voir figures 5 et 6) dans laquelle l'espace de stockage 32 est accessible à un installateur et une position rentrée (voir figure 1, 2 et 3).

La mobilité entre les deux sous-ensembles (portions de stockage 34 et de passage 36) de l'organe de stockage 30 permet d'améliorer l'intégration de l'organe de stockage dans la cavité de réception 14. Ainsi, il est possible de placer la portion de stockage dans une position peu accessible mais prenant un volume utile moindre lorsque la portion de stockage est dans la position rentrée. En effet, la portion de stockage 34 peut ainsi être disposée sur sa tranche entre une paroi périphérique et l'organe de connexion 28 pour occuper un minimum de place. Dans sa position relevée, il est ainsi possible d'avoir une portion de stockage avec une accessibilité satisfaisante pour extraire une fibre optique ou en lover une supplémentaire.

Selon une configuration particulière représentée sur les figures 1 et 2, la portion de stockage 34 est disposée le long de la paroi de fond 18 lorsqu'elle est placée dans la position rentrée. Cette position rentrée correspond à une position de fonctionnement dans laquelle le capot 24 peut être refermé contre le corps de boîtier 12 pour fermer le boîtier de raccordement 10. Autrement dit, la portion de stockage 34 s'étend longitudinalement le long d'un axe de stockage A s'étendant substantiellement parallèlement à la paroi de fond 18 lorsque la portion de stockage 34 est dans la position rentrée.

La portion de stockage 34 est de préférence disposée le long d'une paroi périphérique, par exemple la paroi arrière 22, du corps de boîtier lorsque la portion de stockage 34 est dans la position rentrée.

La portion stockage 34 est de préférence mobile en rotation par rapport à la portion de passage 36 autour d'un axe de relevage B entre les positions relevée et rentrée. La portion de stockage 34 peut présenter un débattement angulaire d'au moins 20° entre les positions relevée et rentrée, de préférence un débattement angulaire d'au moins 45°.

La portion de passage 36 forme le ou les passages d'entrée de câble 26 du corps de boîtier 32 de manière à pouvoir enfiler un ou plusieurs câbles de distribution au travers dudit au moins un passage d'entrée de câble 26.

L'organe de stockage 30 peut comprendre en outre un support de passage formant ledit au moins un passage d'entrée de câble 26. Ce support de passage appartient à la portion de passage 36. Ce support de passage est configuré pour coopérer avec un évidement de passage formé dans une paroi périphérique du corps de boîtier 12. En particulier, l'évidemment de passage est configuré pour recevoir ledit support de passage lorsque l'organe de stockage 30 est monté sur le corps de boîtier 12. Autrement dit, l'évidemment de passage est configuré pour recevoir la portion de passage 36 de l'organe de stockage 30. Ainsi, le ou les passages d'entrée de câble 26 sont formés au travers d'une paroi périphérique du corps de boîtier 12.

L'évidemment de passage est de préférence en complémentarité de forme avec le support de passage de sorte que le support de passage forme une portion de ladite paroi périphérique lorsque l'organe de stockage 30 est monté sur le corps de boîtier 12. En référence aux figures 3 et 5, le support de passage est par exemple une plaque formant un ou plusieurs trous de passage de câble.

L'évidement de passage présente de préférence un contour ouvert au niveau d'une portion supérieure de la paroi périphérique de manière à pouvoir insérer simultanément le support de passage dans l'évidement de passage et l'espace de stockage 32 dans la cavité de réception 12. Ce contour supérieur ouvert de l'évidement de passage permet de placer ou d'extraire l'organe de stockage de la cavité de réception 14 par le dessus de cette cavité de réception 14.

L'organe de stockage 30 comprend de préférence un organe d'arrimage 44 d'un câble de distribution. L'organe d'arrimage 44 est disposé à proximité dudit au moins un passage d'entrée de câble 26. En particulier, l'organe d'arrimage 44 est disposé sur la portion de passage 36. L'organe d'arrimage est de préférence disposé entre le ou les passages d'entrée de câble 26 et la portion de stockage 34.

Le fait de positionner la fonction d'arrimage sur l'organe de stockage 30 amovible permet à l'installateur de manipuler une surlongueur de câble dont la gaine ou la portion amont de câble de distribution est arrimée, donc fixée, à cet organe de fixation 30. La manipulation de la surlongueur, en particulier lors d'un nouveau raccordement, est ainsi grandement facilitée.

Dans cette dernière configuration intégrant l'organe d'arrimage 44, l'organe de stockage 30 regroupe ainsi la fonction de passage d'entrée du câble au sein du corps de boîtier via le ou les passages d'entrée de câble 26, la fonction de stockage de la surlongueur avec l'espace de stockage 32 et la fonction d'arrimage du câble de distribution au corps de boîtier 12. En déportant les fonction de passage d'entrée et d'arrimage généralement dévolues au corps de boîtier lui-même, la manipulation de la surlongueur via un organe de stockage amovible est ainsi grandement simplifiée.

## Revendications

1. Boîtier de raccordement (10) électrique et/ou optique d'au moins un câble de distribution à une pluralité de câbles de dérivation, ledit boîtier de raccordement comprenant :
- un corps de boîtier (12) définissant une cavité de réception (14) d'au moins un organe de connexion (28) dudit au moins un câble de distribution avec la pluralité de câbles de dérivation, ladite cavité de réception (14) étant ouverte au niveau d'une face supérieure,
- un capot (24) fixé au corps de boîtier (12) pour sélectivement fermer la cavité de réception (14) au niveau de la face supérieure,
- au moins un passage d'entrée de câble (26) dans la cavité de réception (14) pour ledit au moins câble de distribution,
- au moins un passage de sortie de câble de la cavité de réception pour la pluralité de câbles de dérivation,
- un organe de stockage (30) d'une surlongueur de câble de distribution formant un espace de stockage (32) pour recevoir une portion de câble de distribution enroulée sur elle-même, l'organe de stockage (30) étant monté de manière amovible sur le corps de boîtier (12) pour permettre le retrait de l'organe de stockage (30) de la cavité de réception (14) au travers de la face supérieure de la cavité de réception (14), l'organe de stockage (30) formant ledit au moins un passage d'entrée de câble (26) de manière à pouvoir enfiler un ou plusieurs câbles de distribution au travers dudit au moins un passage d'entrée de câble (26) et disposer une surlongueur du ou des câbles de distribution dans l'espace de stockage (32) lorsque l'organe de stockage (30) est retiré de la cavité de réception (14), le boîtier de raccordement (10) comprenant au moins un organe de connexion (28) dudit au moins un câble de distribution avec la pluralité de câbles de dérivation, l'organe de connexion (28) étant reçu dans la cavité (14) du corps du boîtier (12), **caractérisé en ce que** l'organe de stockage (30) est un élément dissocié de l'organe de connexion (28).

2. Boîtier de raccordement (10) selon la revendication 1, dans lequel l'organe de stockage (30) comprend une portion de stockage (34) définissant un espace de stockage (32) d'une surlongueur de câble de distribution et une portion de passage (36) formant ledit au moins passage d'entrée de câble.

3. Boîtier de raccordement selon la revendication 2, dans lequel la portion de stockage (34) est mobile par rapport à la portion de passage (36) entre une position relevée dans laquelle l'espace de stockage (32) est accessible à un installateur et une position rentrée.

4. Boîtier de raccordement selon la revendication 3, dans lequel la portion de stockage (34) s'étend longitudinalement le long d'un axe de stockage (A), le corps de boîtier (12) comprenant une paroi de fond (18) correspondant au fond de la cavité de réception (14), l'axe de stockage s'étendant substantiellement parallèlement à la paroi de fond (18) lorsque la portion de stockage (34) est dans la position rentrée.

5. Boîtier de raccordement selon la revendication 4, dans lequel la portion de stockage (34) est disposée le long d'une paroi périphérique du corps de boîtier lorsque la portion de stockage est dans la position rentrée.

6. Boîtier de raccordement selon l'une des revendications 3 à 5, dans lequel la portion stockage est mobile en rotation par rapport à la portion de passage autour d'un axe de relevage (B) entre les positions relevée et rentrée.

7. Boîtier de raccordement selon la revendication 6, dans lequel la portion de stockage présente un débattement angulaire d'au moins 20° entre les positions relevée et rentrée, de préférence un débattement angulaire d'au moins 45°.

8. Boîtier de raccordement selon l'une quelconque des revendications précédentes, dans lequel l'organe de stockage comprend un organe d'arrimage (44) d'un câble de distribution disposé à proximité dudit au moins un passage d'entrée de câble.

9. Boîtier de raccordement selon la revendication 8 en combinaison avec la revendication 2, dans lequel l'organe d'arrimage (44) est disposé sur la portion de passage (36).

10. Boîtier de raccordement selon l'une quelconque des revendications précédentes, dans lequel l'organe de stockage (30) comprend un support de passage formant ledit au moins un passage d'entrée de câble (26), le corps de boîtier (12) comprenant une paroi périphérique formant un évidement de passage configuré pour recevoir ledit support de passage lorsque l'organe de stockage (30) est monté sur le corps de boîtier.

11. Boîtier de raccordement selon la revendication 10, dans lequel l'évidement de passage est en complémentarité de forme avec le support de passage de sorte que le support de passage forme une portion de ladite paroi périphérique lorsque l'organe de stockage est monté sur le corps de boîtier.

12. Boîtier de raccordement selon la revendication 10 ou 11, dans lequel le support de passage est une plaque formant un ou plusieurs trous de passage de câble.

13. Boîtier de raccordement selon l'une quelconque des revendications 10 à 12, dans lequel l'évidement de passage présente un contour ouvert au niveau d'une portion supérieure de manière à pouvoir insérer simultanément le support de passage dans l'évidement de passage et l'espace de stockage dans la cavité de réception.

14. Boîtier de raccordement selon l'une quelconque des revendications précédentes, dans lequel ledit au moins un câble de distribution et la pluralité de câbles de dérivation sont des câbles optiques.

## Patentansprüche

1. Anschlussgehäuse (10) zum elektrischen und/oder optischen Anschließen mindestens eines Verteilerkabels an eine Mehrzahl von Abzweigkabeln, wobei das Anschlussgehäuse umfasst:
- einen Gehäusekörper (12), der einen Aufnahmehohlraum (14) zur Aufnahme mindestens eines Verbindungselements (28) zum Verbinden des mindestens einen Verteilerkabels mit der Mehrzahl von Abzweigkabeln definiert, wobei der Aufnahmehohlraum (14) an einer Oberseite offen ist,
- eine Abdeckung (24), die an dem Gehäusekörper (12) befestigt ist, um den Aufnahmehohlraum (14) an der Oberseite selektiv zu verschließen;
- mindestens einen Kabeleinführungsdurchlass (26) in den Aufnahmehohlraum (14) für das mindestens eine Verteilerkabel,
- mindestens einen Kabelausführungsdurchlass aus dem Aufnahmehohlraum für die Mehrzahl von Abzweigkabeln,
- ein Speicherelement (30) für eine Verteilerkabelüberlänge, das einen Speicherraum (32) bildet, um einen aufgewickelten Verteilerkabelabschnitt aufzunehmen;
wobei das Speicherelement (30) abnehmbar an dem Gehäusekörper (12) montiert ist, um das Entnehmen des Speicherelements (30) aus dem Aufnahmehohlraum (14) durch die Oberseite des Aufnahmehohlraums (14) zu ermöglichen, wobei das Speicherelement (30) den mindestens einen Kabeleinführungsdurchlass (26) bildet, so dass ein oder mehrere Verteilerkabel durch den mindestens einen Kabeleinführungsdurchlass (26) eingeführt werden können und eine Überlänge des oder der Verteilerkabel in dem Speicherraum (32) angeordnet werden kann, wenn das Speicherelement (30) aus dem Aufnahmehohlraum (14) entnommen wird, wobei das Anschlussgehäuse (10) mindestens ein Verbindungselement (28) zum Verbinden des mindestens einen Verteilerkabels mit der Mehrzahl von Abzweigkabeln umfasst, wobei das Verbindungselement (28) in dem Hohlraum (14) des Körpers des Gehäuses (12) aufgenommen ist, **dadurch gekennzeichnet, dass** das Speicherelement (30) ein von dem Verbindungselement (28) getrenntes Teil ist.

2. Anschlussgehäuse (10) nach Anspruch 1, wobei das Speicherelement (30) einen Speicherabschnitt (34) umfasst, der einen Speicherraum (32) für eine Verteilerkabelüberlänge definiert, und einen Durchlassabschnitt (36), der den mindestens einen Kabeleinführungsdurchlass bildet.

3. Anschlussgehäuse nach Anspruch 2, wobei der Speicherabschnitt (34) in Bezug auf den Durchlassabschnitt (36) zwischen einer angehobenen Position, in der der Speicherraum (32) für einen Installateur zugänglich ist, und einer eingezogenen Position beweglich ist.

4. Anschlussgehäuse nach Anspruch 3, wobei sich der Speicherabschnitt (34) längs entlang einer Speicherachse (A) erstreckt, wobei der Gehäusekörper (12) eine Bodenwand (18) umfasst, die dem Boden des Aufnahmehohlraums (14) entspricht, wobei sich die Speicherachse im Wesentlichen parallel zu der Bodenwand (18) erstreckt, wenn der Speicherabschnitt (34) in der eingezogenen Position ist.

5. Anschlussgehäuse nach Anspruch 4, wobei der Speicherabschnitt (34) entlang einer Umfangswand des Gehäusekörpers angeordnet ist, wenn der Speicherabschnitt in der eingezogenen Position ist.

6. Anschlussgehäuse nach einem der Ansprüche 3 bis 5, wobei der Speicherabschnitt in Bezug auf den Durchlassabschnitt um eine Hubachse (B) zwischen der angehobenen und der eingezogenen Position drehbeweglich ist.

7. Anschlussgehäuse nach Anspruch 6, wobei der Speicherabschnitt eine Winkelauslenkung von mindestens 20° zwischen der angehobenen und der eingezogenen Position aufweist, vorzugsweise eine Winkelauslenkung von mindestens 45°.

8. Anschlussgehäuse nach einem der vorhergehenden Ansprüche, wobei das Speicherelement ein Befestigungselement (44) für ein Verteilerkabel umfasst, das in der Nähe des mindestens einen Kabeleinführungsdurchlasses angeordnet ist.

9. Anschlussgehäuse nach Anspruch 8 in Verbindung mit Anspruch 2, wobei das Befestigungselement (44) an dem Durchlassabschnitt (36) angeordnet ist.

10. Anschlussgehäuse nach einem der vorhergehenden Ansprüche, wobei das Speicherelement (30) einen Durchlassträger umfasst, der den mindestens einen Kabeleinführungsdurchlass (26) bildet, wobei der Gehäusekörper (12) eine Umfangswand umfasst, die eine Durchlassausnehmung bildet, die dazu ausgestaltet ist, den Durchlassträger aufzunehmen, wenn das Speicherelement (30) an dem Gehäusekörper montiert ist.

11. Anschlussgehäuse nach Anspruch 10, wobei die Durchlassausnehmung formschlüssig mit dem Durchlassträger ist, so dass der Durchlassträger einen Abschnitt der Umfangswand bildet, wenn das Speicherelement an dem Gehäusekörper montiert ist.

12. Anschlussgehäuse nach Anspruch 10 oder 11, wobei der Durchlassträger eine Platte ist, die ein oder mehrere Kabeldurchlassöffnungen bildet.

13. Anschlussgehäuse nach einem der Ansprüche 10 bis 12, wobei die Durchlassausnehmung eine offene Kontur an einem oberen Abschnitt aufweist, so dass gleichzeitig der Durchlassträger in die Durchlassausnehmung und der Speicherraum in den Aufnahmehohlraum eingesetzt werden kann.

14. Anschlussgehäuse nach einem der vorhergehenden Ansprüche, wobei das mindestens eine Verteilerkabel und die Mehrzahl von Abzweigkabeln optische Kabel sind.

## Claims

1. Box (10) for electrical and/or optical connection of at least one distribution cable to a plurality of branch cables, said connection box comprising:
- a box body (12) defining a cavity (14) for receiving at least one member (28) for connecting said at least one distribution cable to the plurality of branch cables, said receiving cavity (14) being open at an upper face,
- a cover (24) fastened to the box body (12) to selectively close the receiving cavity (14) at the upper face,
- at least one passage (26) for cable entry into the receiving cavity (14) for said at least one distribution cable,
- at least one passage for cable exit from the receiving cavity for the plurality of branch cables,
- a member (30) for storing an excess length of distribution cable forming a storage space (32) to receive a portion of distribution cable wound on itself, the storage member (30) being removably mounted on the box body (12) to allow the removal of the storage member (30) from the receiving cavity (14) through the upper face of the receiving cavity (14), the storage member (30) forming said at least one cable entry passage (26) so that it is possible to thread one or more distribution cables through said at least one cable entry passage (26) and dispose an excess length of the one or more distribution cables in the storage space (32) when the storage member (30) is removed from the receiving cavity (14), the connection box (10) comprising at least one member (28) for connecting said at least one distribution cable to the plurality of branch cables, the connection member (28) being received in the cavity (14) of the body of the box (12), **characterized in that** the storage member (30) is an element that is dissociated from the connection member (28).

2. Connection box (10) according to Claim 1, wherein the storage member (30) comprises a storage portion (34) defining a space (32) for storing an excess length of distribution cable and a passage portion (36) forming said at least one cable entry passage.

3. Connection box according to Claim 2, wherein the storage portion (34) is able to move relative to the passage portion (36) between a raised position in which the storage space (32) is accessible to an installer and a stowed position.

4. Connection box according to Claim 3, wherein the storage portion (34) extends longitudinally along a storage axis (A), the box body (12) comprising a bottom wall (18) corresponding to the bottom of the receiving cavity (14), the storage axis extending substantially parallel to the bottom wall (18) when the storage portion (34) is in the stowed position.

5. Connection box according to Claim 4, wherein the storage portion (34) is disposed along a peripheral wall of the box body when the storage portion is in the stowed position.

6. Connection box according to one of Claims 3 to 5, wherein the storage portion is able to rotate relative to the passage portion about a lifting axis (B) between the raised and stowed positions.

7. Connection box according to Claim 6, wherein the storage portion has an angular displacement of at least 20° between the raised and stowed positions, preferably an angular displacement of at least 45°.

8. Connection box according to any one of the preceding claims, wherein the storage member comprises a member (44) for anchoring a distribution cable that is disposed in proximity to said at least one cable entry passage.

9. Connection box according to Claim 8 in combination with Claim 2, wherein the anchoring member (44) is disposed on the passage portion (36).

10. Connection box according to any one of the preceding claims, wherein the storage member (30) comprises a passage support forming said at least one cable entry passage (26), the box body (12) comprising a peripheral wall forming a passage cutout configured to receive said passage support when the storage member (30) is mounted on the box body.

11. Connection box according to Claim 10, wherein the passage cutout has a shape complementary to that of the passage support such that the passage support forms a portion of said peripheral wall when the storage member is mounted on the box body.

12. Connection box according to Claim 10 or 11, wherein the passage support is a plate forming one or more cable passage holes.

13. Connection box according to any one of Claims 10 to 12, wherein the passage cutout has an open contour at an upper portion so that it is possible to insert, simultaneously, the passage support into the passage cutout and the storage space into the receiving cavity.

14. Connection box according to any one of the preceding claims, wherein said at least one distribution cable and the plurality of branch cables are optical cables.
